# EUROPEAN PATENT APPLICATION

(11) **EP 1 172 425 A1**
(43) Date of publication of application: **16.01.2002**
(21) Application number: 00202427.1
(22) Date of filing: 11.07.2000
(51) Int. Cl.: C09D 167/00

(54) **Outdoor durable coating composition**

(71) Applicant: DSM N.V., 6411 TE Heerlen (NL)
(72) Inventor: Gijsman, Pieter, 6191 Groot Genhout (NL); Meijers, Guido Jozefina Wilhelmus, 6171 CG Stein (NL)

(57) **Abstract**

The invention relates to an outdoor durable coating composition containing a polymer comprising unsaturated polycyclic hydrocarbon units.

The invention also relates to a coil coating system containing a polyester comprising dialkyl-naphtalene-dicarboxylate units,for example dimethyl-naphtalene-dicarboxylate units.

The naphtalene-dicarboxylate units may be selected from the group consisting of 2,6-naphtalene-dicarboxylate units, 1,4- naphtalene-dicarboxylate units and 1,5-naphtalene-dicarboxylate units.

## Description

The invention relates to an outdoor durable coating composition. The invention also relates to a coil coating composition.

Coil coating is a high-tech, high-speed process (as elucidated for example in "Coil-coatings" by Joseph E. Gaske; Federation of Societies for Coatings Technology, February 1987,
pp 7-19). A coil coating binder system must give good results in terms of curing, flexibility and outdoor durability. The UV-stability of the known coil coatings has to be improved.

It is the object of the present invention to provide an improved outdoor durable coating system. This system also has to show other requirements, such as, for example, flexibility, hardness and gloss. Furthermore it must be possible to process the composition with the aid of the application techniques currently used on an industrial scale in the coil coating industry.

The coating composition according to the invention comprises a polymer containing unsaturated polycyclic hydrocarbon units.

The presence of the hydrocarbon units in the polymer results in a coating having a decreased rate of loss gloss and consequently a higher UV-stability.

Preferably, the polymer comprises between 0.1 and 10 % by weight, more preferably between 0.5 and 5 % by weight, of the hydrocarbon units.

The polymer may be for example a polyester, a polyacrylate, an epoxy resin or a polyurethane.

Preferably, the polymer is a polyester.

Suitable unsaturated polycyclic hydrocarbon units are, for example, antracene, chrysene, coronene fluor anthene, fluorine, indacene, indene, naphthalene, ovalene, perylene, phenalene, phenantrene, picene, pleiadene, pyrene, pyrantrene or rubicene units.

The hydrocarbon units may be substituted.

According to a preferred embodiment of the invention the composition contains a polyester comprising dialkyl-naphtalene-dicarboxylate units.

The presence of alkyl-naphtalene-dicarboxylic acid units in the polyester results in a coating having a decreased rate of loss gloss and consequently a higher UV-stability.

According to a further preferred embodiment of the invention the composition contains a polyester comprising dimethyl-naphtalene-dicarboxylate units.

The naphtalene-dicarboxylate units may be 2,6-naphtalene-dicarboxylate units, 1,4- naphtalene-dicarboxylate units, 1,5-naphtalene-dicarboxylate units and 2,7-naphtalene-dicarboxylate units.

Preferably, 2,6-naphtalene-dicarboxylate units are applied.

Most preferably dimethyl-2,6-naphtalene-dicarboxylate units are applied.

Preferably, the polyester comprises between 0.1 and 10 % by weight, more preferably between 0.5 and 5 % by weight, of dialkyl-naphtalene-dicarboxylate units.

The glass transition temperature of the polyester generally ranges between -20°C and 150°C. The acid value generally ranges between 0 and 100 mg KOH/gram resin. The hydroxyl value ranges generally between 0 and 100 mg KOH/gram resin.

The molecular weight (Mₙ) of the polymer is generally between about 2000 and about 15000 and preferably between about 3000 and about 8000.

The polyester resin may be linear or branched.

The polyester may be both a saturated polyester and an unsaturated polyester.

Preferably, the polyester is a saturated polyester.

The polyester according to the invention may comprise also other acid-units such as for example isophthalic acid, terephthalic acid (dimethyl terephthalate ester), adipic acid, sebacic acid, hexahydroterephthalic acid (CHDA), decane dicarboxylic acid, 5-6-butylisophthalic acid and/or dimerised fatty acids or acid anhydrides such as phthalic anhydride, tetrahydrophthalic anhydride, succinic anhydride, maleic anhydride, trimellitic anhydride, pyromellitic anhydride and/or hexahydrophthalic anhydride.

Preferably adipic acid, sebacic acid, hexahydroterephthalic acid (CHDA) and/or hexahydrophthalic anhydride are used.

Suitable polyalcohols for preparing the polyester include ethylene glycol, diethylene glycol, butanediol (1,4), hexanediol (1,6), neopentyl glycol, 2-methyl-1,3-propanediol, 1,3-butanediol, 1,3-propanediol, 1,2-propanediol, 2-ethyl-2-butyl-1,3-propanediol, trimethylpentanediol, hydroxypivalic neopentyl glycol ester, tricyclodecane dimethanol, cyclohexane dimethanol, bisphenol A bishydroxyethyl ether, trimethylolpropane, glycerol and/or pentaerythritol.

The esterification reaction preferably takes place under a nitrogen atmosphere at temperatures between 180°C and 260°C. Catalysts such as for example dibutyl tin oxide, tin chloride, butyl chlorotin dihydroxide (FASCAT™) or tetrabutyoxytitanate and antioxidants such as phosphorous acid, trinonylphenylphosphite or triphenylphosphite may be added as additives. During the reaction the reaction water released is removed through distillation and the desired degree of esterification can be achieved by applying azeotropic distillation and/or vacuum in the last phase.

This process results in a polyester that may be dissolved in an amount of organic solvent or in a mixture of organic solvents such that the desired solids content is obtained. The polyester may also be solved in water or be in powder form.

According to a preferred embodiment the composition is a powder coating.

The polyester may be modified , for example, with an acrylate.

Suitable solvents include, for example, aromatic hydrocarbon compounds (for example Solvesso types), N-methylpyrolidone, xylene, propylene glycol monomethylether, methylpropylene glycol acetate, dibasic ester, isophoron, ethylethoxypropionate, ethylene-propylene glycol acetate and/or butyl glycol. Preferably, aromatic hydrocarbons and/or butyl glycol are used.

Preferably, the polymer mixture according to the invention has to be cured with a crosslinker.

Examples of suitable crosslinkers include compounds containing epoxy groups, compounds containing amino groups and compounds containing isocyanate groups. The crosslinker may be selected depending on the desired use.

Examples of suitable compounds containing epoxy groups are hydrogenated bisphenol A epoxy compounds, aliphatic epoxy compounds, epoxidised alkyd resins, epoxidised oils (for example epoxidised linseed oil or soybean oil), epoxidised borates and triglycidyl isocyanurate.

The carboxyl : epoxy equivalent ratio is generally between 0.85 : 1 and 1 : 0.85, preferably between 0.9 : 1 and 1 : 0.9.

Examples of suitable amino resin crosslinkers are benzoguanamine, melamine and ureaformaldehyde resins. The weight ratio polyester : amino resin is generally between 95:5 and 60:40 (based on solid resin).

Examples of suitable crosslinkers containing (blocked) isocyanate groups include hexamethylene diisocyanate (HDI), toluene diisocyanate (TDI), isophoron diisocyanate (IPDI), uredion, tetramethylxylene diisoycanate (TMXDI), 3,4 isocyanatomethyl-1-methyl-cyclohexylisocyanate (IMCI) and their dimers and trimers. Preferably these crosslinkers are blocked.

The resin may contain a solid catalyst fused in it. It is also possible to mix a liquid catalyst or a catalyst solution into the paint formulation comprising the resin mixture.

Suitable catalysts for the acid-epoxy curing reaction are described by Madec et al. in 'Kinetics and Mechanisms of Polyesterifications', Advances in Polymer Science, 182-198 (1985). Examples of suitable classes include N-dialkylamine pyridines, tertiary amines, imidazoles, guanidines, cyclic amines and latent amine catalysts. The catalyst may be blocked.

Examples of suitable catalysts for curing an OH-functional polyester and an amino resin as a crosslinker include strong acids such as for example sulphonic acids, mono and dialkyl acid phosphate, butyl phosphate and butyl maleate.

Suitable sulphonic acids include for example paratoluene sulphonic acid, methane sulphonic acid, nonyl benzene sulphonic acid, dinonyl naphthalene disulphonic acid and dodecyl sulphonic acid.

Suitable catalysts for curing an OH-functional polyester and an isocyanate based crosslinker include, for example, dibutyl tin dilaureate and zinc octoate.

If catalysts are present, they are generally present in amounts of between about 0.1 and about 5 wt.% (relative to the polyester).

The curing conditions and additives can be chosen to depend on the desired peak metal temperature (PMT) and the nature and thickness of the substrate. The curing time will generally be between about 20 and about 70 seconds at temperatures between about 250°C and about 400°C and a PMT between 180°C and 249°C.

Suitable substrates include for example steel, tin-plated steel and aluminium.

The coil coating according to the invention is especially suitable for outdoor applications but they are also suitable for use as primer and as top coat and may for example be used as coating for household equipment such as fridges, deepfreezes, microwave ovens, ovens and boilers, as coating for caravans and as coating for facade cladding.

The type of monomers to be used to prepare the polyester, the crosslinkers and the curing conditions can be selected to depend on the desired use.

The composition according to the invention may be used in pigmented an in unpigmented compositions.

The usual additives such as for example pigments, fillers, stabilisers, dispersing agents, flow-promoting agents and defoaming agents may be added to the composition according to the invention.

The invention will be elucidated with reference to the following, non-limiting experiments and examples.

### Experiment I

### Preparation of a polyester resin

2,1 mol hydroxy pivaline neopentylglycolester (Esterdiol 204),0,2 mol dimethyl-2,6-naphtalene dicarboxylate (NDC), 4,5 mol 1,4-cyclohexane dicarboxylic acid (CHDA), 5,3 mol hexahydrophalic acid anhydride ( HHPZA) and 0,05 part by weight of dibutyl tin oxide were heated under a nitrogen atmosphere in a glass reaction flask with a mechanical stirrer, a thermometer and a still with a Vigreux column. The esterification reaction started at 180 °C and the reaction water formed was removed through distillation. The maximum reaction temperature was 240°C. After a clear mixture was obtained an azeotropic destillation with an aromatic hydrocarbon fraction ( Solvesso 150 of Esso) was started until an acid value lower than 7 was reached.

The acid number of the solid resin obtained was 5 mg of KOH/gram resin. The hydroxyl functionality was 2.0

The viscosity (measured via Emila at 23 °C, 60% solution in Solvesso/ butylglycol(4:1) (spindle 100) was 35 dPa.s.

The number average molecular weight (Mn) was 4600 gram/mol, (determined with the aid of gel permeation chromatography using a polystyrene standard).

The polyester's glass transition temperature was 22°C (determined with a Mettler TA 3000 DSC (5°C/min.)).

### Comparative Experiment A.

### Preparation of a polyester resin

Experiment 1 was repeated with the exception that instead of 0.2 mol NDC and 4.5 mol CHDA 4.7 mol CHDA were applied.

The acid number of the solid resin obtained was 5 mg of KOH/gram resin. The hydroxyl functionality was 2.0

The viscosity (measured via Emila at 23 °C, 60% solution in Solvesso/ butylglycol (4:1) spindle 100) was 26dPa.s.

The number average molecular weight (Mn) was 4590 gram/mol (determined with the aid of gel permeation chromatography using a polystyrene standard).

The acid number of the solid resin was 0.8 mg of KOH/gram.

The viscosity, measured with the aid of a Physica Viscolab LC3 at 23°C, was 49 dPa.s.

The glass transition temperature of the polyester was 20 °C (determined with a Mettler TA 3000 DSC (5°C/min.)).

### Example I

### A paint composition and a coil coating

23,8 parts by weight of the polyester according to Experiment I ( dissolved in a mixture containing Solvesso 150™ and butyl glycol in a weight ratio of 4:1; 15,18 parts by weight solid), 62 parts by weight titanium dioxide ( Kronos 2160) and 13,8 parts by weight of a thinner ( Solvesso 150: butyl glycol in a ratio 3:1) were ground to a pigment paste. During the preparation the paste's temperature did not rise above 70°C.

After cooling to room temperature, 71.8 parts of the resin according to experiment 1 ( 45.81 parts by weight solid), 3.0 parts of a butylated melamine (Uramex MF 821 B solved in n-butanol, 2,52 parts by weight solid), 13 parts by weight tris HDI ( Desmodur VP-LS 2257; 9.1 parts by weight solid), 0.88 parts by weight dibutyltin laurate were mixed. A viscosity of 80-130 seconds' flow time, DIN cup 4, at 23°C (DIN standard 53 211) was reached.

This paint composition was applied to chromated aluminium coil as a primer using a 90 µm wire coater.

After curing in an oven in a drying cycle of 40 seconds at 316 °C resulting in a peak metal temperature (PMT) of 232-241 °C, the properties as disclosed in Table I were determined.

### Comparative Example A

Example I was repeated with the exception that the polyester according to experiment 1 was replaced by the polyester according to experiment A.

**Table 1**

| | I | A |
|---|---|---|
| Flexibility | 0.5T | 0.5T |
| MEK resistance | 100/5 | 100/5 |
| Hardness | HB | HB |
| Impact resistance | 80 | 80 |
| Gloss retention | > 7000 hours | 4000 hours |

The characteristics were determined as follows:
- T-bend flexibility: ASTM-D-4145
- MEK resistance: ECCA T-11
- Hardness : ASTM D 3363-1974
- Impact resistance: ASTM D-2794-1969
- Gloss retention: WOM (50% loss of gloss measured under angle of 60° ;ASTM-D523).

The polyester according to the invention results in an improved outdoor durable coating system showing also other required characteristics.

## Claims

1. A coating composition containing a polymer comprising unsaturated polycyclic hydrocarbon units.

2. A coating composition according to Claim 1 **characterised in that** the polymer is a polyester.

3. A coating composition according to any one of Claims 1-2 **characterised in that** the polycyclic hydrocarbon units is an antracene, chrysene, coronene fluor anthene, fluorine, indacene, indene, naphthalene, ovalene, perylene, phenalene, phenantrene, picene, pleiadene, pyrene, pyrantrene or rubicene unit.

4. A coating composition according to any one of Claims 1-3 **characterised in that** the polymer comprises between 0.1 and 10 % by weight of unsaturated polycyclic hydrocarbon units.

5. A coating composition according to any one of Claims 1-4 **characterised in that** the composition contains a polyester comprising dialkyl-naphtalene-dicarboxylate units.

6. A coating composition according to any one of Claims 1-5 **characterised in that** the polyester comprises dimethyl-naphtalene-dicarboxylate units.

7. A coating composition according to any one of Claims 1-6 **characterised in that** the naphtalene-dicarboxylate units are selected from the group consisting of 2,6-naphtalene-dicarboxylate units, 1,4- naphtalene-dicarboxylate units and 1,5-naphtalene-dicarboxylate units.

8. A coating composition according to Claim 7 **characterised in that** the naphtalene-dicarboxylate units are 2,6-naphtalene-dicarboxylate units.

9. A coating composition according to any one of Claims 1-8 **characterised in that** the polyester comprises between 0.1 and 10 % by weight of naphtalene-dicarboxylate units.

10. A coating composition according to Claim 9, **characterised in that** the polyester comprises between 0.5 and 5 % by weight of dimethyl-2,6-naphtalene-dicarboxylate units.

11. A coating composition according to any one of Claims 1-10 **characterized in that** the coating composition is a coil coating composition

12. A substrate coated with the composition according to any one of Claims 1-11.
